Europäisches Patentamt

European Patent Office

Office européen des brevets

(19)

(11) **EP 0 993 603 B1**

(12) **EUROPÄISCHE PATENTSCHRIFT**

(45) Veröffentlichungstag und Bekanntmachung des Hinweises auf die Patenterteilung:
**03.07.2002 Patentblatt 2002/27**

(21) Anmeldenummer: **98944970.7**

(22) Anmeldetag: **04.07.1998**

(51) Int Cl.$^7$: **G01N 22/02**

(86) Internationale Anmeldenummer:
**PCT/DE98/01905**

(87) Internationale Veröffentlichungsnummer:
**WO 99/01752 (14.01.1999 Gazette 1999/02)**

(54) **VERFAHREN ZUR BESTIMMUNG DER IN EINER ZWEIPHASENSTRÖMUNG MIT GASFÖRMIGEM TRÄGERMEDIUM ENTHALTENEN MENGE FESTEN UND/ODER FLÜSSIGEN MATERIALS**

METHOD FOR DETERMINING QUANTITY OF SOLID AND/OR LIQUID MATERIAL CONTAINED IN A TWO-PHASE CURRENT WITH A GASEOUS CARRIER MEDIUM

PROCEDE DE DETERMINATION D'UNE QUANTITE DE MATERIAU SOLIDE OU LIQUIDE CONTENU DANS UN ECOULEMENT A DEUX PHASES AVEC MILIEU PORTEUR GAZEUX

(84) Benannte Vertragsstaaten:
**AT BE CH DK ES FI FR GB GR IE IT LI NL PT SE**
Benannte Erstreckungsstaaten:
**RO**

(30) Priorität: **04.07.1997 DE 19728612**

(43) Veröffentlichungstag der Anmeldung:
**19.04.2000 Patentblatt 2000/16**

(73) Patentinhaber: **Promecon Prozess- Und Messtechnik Conrads GmbH**
**39179 Barleben (DE)**

(72) Erfinder:
• **CONRADS, Hans, Georg**
  **D-39179 Barleben (DE)**
• **KLUPSCH, Volkhard**
  **D-99089 Erfurt (DE)**

(74) Vertreter: **Heyner, Klaus, Dr.-Ing.**
**Mittelweg 1h**
**01728 Bannewitz/Dresden (DE)**

(56) Entgegenhaltungen:
**EP-A- 0 669 522          EP-A- 0 717 269**
**US-A- 5 177 444**

EP 0 993 603 B1

**Beschreibung**

Die Erfindung betrifft ein Verfahren zur Bestimmung der Menge an festem und/oder flüssigem Gut, das in einer Zweiphasenströmung mit gasförmigem Trägermedium enthalten ist. Ein bevorzugtes Anwendungsgebiet der Erfindung ist die Bestimmung der in Brennerleitungen eines Kohlekraftwerkes pneumatisch transportierten Kohlenstaubmenge.

DerTransport von festen und/oder flüssigen Gütern, die in Form kleiner oder kleinster Partikel vorliegen, in einer Zweiphasenströmung mit gasförmigem Trägermedium erfolgt häufig bei turbulenten Strömungen, um eine ausreichende Transportgeschwindigkeit und eine ausreichende Fördermenge an Feststoff und/oder Flüssigkeit zu erreichen. Insbesondere beim Tranport feinster Feststoffpartikel ist es bei realen Fördersystemen nicht zu vermeiden, daß sich im Förderkanal sogenannte Strähnen erhöhter Dichte herausbilden. Derartige Strähnen können zum einen geometrisch sehr stabil und ortsfest sein, sie können aber auch stochastisch an unterschiedlichsten Stellen auftreten und ihre Ausdehnung sowie ihre Dichte verändern oder innerhalb des Förderkanals wandern. Besonders an Verzweigungspunkten kann es infolge der Strähnenbildung zu sehr ungleichmäßigen Feststoffverteilungen und damit zu erheblichen Mengenunterschieden an transportiertem Gut innerhalb einzelner Förderkanäle kommen.

Es ist daher ein großes Problem, die Menge des in einem pneumatischen Fördersystem transportierten Gutes, insbesondere bei verzweigten Systemen die Menge des in einzelnen Verzweigungskanälen transportierten Gutes, zu bestimmen.

Bekannte Verfahren, wie beispielsweise an verschiedenen Meßpunkten isokinetisch absaugende Rohre, liefern häufig sehr verfälschte Meßwerte, da Strähnen kaum oder nur zufällig erfaßt werden. Hinzu kommt die Langwierigkeit derartiger Messungen, die oft erst nach Stunden Meßergebnisse liefern und damit für eine Anwendung in einem Regelkreis ausgeschlossen sind.

Um pneumatische Förderprozesse zu kontrollieren und die Menge des geförderten Gutes in verzweigten Systemen zu regeln, bedarfes schneller Meßsysteme. Es wird daher seit längerem versucht, Mikrowellen für derartige Meßaufgaben einzusetzen.

Dabei werden Mikrowellen einer bestimmten Frequenz in einen als Meßstrecke präparierten Kanalabschnitt eingekoppelt und am Ende der Meßstrecke die Veränderung der Mikrowelle in Amplitude und Phase registriert. Der physikalische Hintergrund dieses Meßprinzips ist die Tatsache, daß die Beladung des Trägergases mit Feststoff und/oder Flüssigkeit zur Veränderung der komplexen Dielektrizitätskonstante innerhalb des Förderkanals führt und Mikrowellen in Abhängigkeit von dieser Dielektrizitätskonstante eine Dämpfung und Phasenverschiebung erfahren. Ein entsprechendes Meßverfahren wird beispielsweise in der EP 0717269, EP 669522 oder auch der US 5177444 beschrieben. Die Empfindlichkeit bekannter Meßverfahren unter Anwendung von Mikrowellen ist aber für pneumatische Fördersysteme nicht ausreichend, insbesondere, wenn infolge verzweigter Förderkanäle in einzelnen Kanälen oder Kanalabschnitten unterschiedliche Gutmengen transportiert werden bzw. durch die bereits erwähnte Strähnenbildung räumlich verteilt innerhalb des Rohr- bzw. Kanalsystems erhebliche Konzentrationsunterschiede an festem und/oder flüssigem Gut pro $m^3$ Trägergas auftreten. So ist beispielsweise für eine ausreichend genaue Regelung der Kohlenstaubzufuhr zu einem Brennersystem eines Kraftwerkskessels eine Meßauflösung von 1 g Kohlenstaub pro $m^3$ Trägergas erforderlich. Derartig geringe Beladungsunterschiede be wirken nur eine extrem geringe Veränderung der komplexen Dielektrizitätskonstante und beeinflussen damit Dämpfung und Phase der Mikrowelle nur sehr wenig.

Die Anwendung von Mikrowellen zur Messung der Beladung in pneumatischen Transportsystemen bringt darüber hinaus erhebliche Probleme aufgrund von Störeinflüssen durch reflektierte Mikrowellen mit sich. Insbesondere bei geringen Beladungen ist die Mikrowellendämpfung sehr gering, so daß sie im Kanalsystem wie in einem Hohlleiter über weite Strecken geleitet und an Einengungen, Verzweigungen oder Enden reflektiert werden. Es kann zur Überlagerung von hin- und rücklaufenden Wellen und damit zu erheblichen Verfälschungen der Meßergebnisse kommen.

Den bekannten Verfahren unter Einsatz von Mikrowellen haftet darüber hinaus der Nachteil an, daß sie eines erheblichen apparativen Aufwandes bedürfen. In der Regel ist es erforderlich, einen als Meßstrecke zu präparierenden Kanalabschnitt, der hohe geometrische Präzision und angepaßte Sende- sowie Empfangsantennen aufweist, in das Kanalsystem einzufügen. Bekannt ist auch der aufwendige Einbau von Schlitzkopplern als Sende- und Empfangseinrichtung in bestehende Kanalabschnitte, wobei diese einer vorgegebenen Geometrie entsprechen müssen.

Ziel der Erfindung ist es, ein Verfahren zur Bestimmung der Menge des in einer Zweiphasenströmung mit gasförmigem Trägermedium enthaltenen festen und/oder flüssigen Gutes zu schaffen, das auch bei geringen Beladungen bzw. geringen Beladungsunterschieden anwendbar ist und keines wesentlichen Eingriffes in bestehende Kanalsysteme bedarf Dazu besteht die Aufgabe, ein Verfahren zu entwickeln, daß sich durch eine Mindestmeßauflösung von 1g Gut je $m^3$ Trägermedium auszeichnet und keine überhöhten Anforderungen an die Geometrie der Meßstrecke stellt.

Erfindungsgemäß wird diese Aufgabe durch ein Verfahren dem 1. Patentanspruch gemäß gelöst, wobei die nachfolgenden Ansprüche vorteilhafte Ausgestaltungen der Erfindung beschreiben.

Die Erfindung nutzt den bekannten physikalischen Zusammenhang aus, daß die Frequenzabhängigkeit der Dämpfung eines elektrischen Wechselfeldes entlang eines konstanten Weges unterhalb der für die Wellenausbreitung charakteristischen Grenzfrequenz einen relativ steilen nahezu linearen Übergang ähnlich einer Sprungfunktion von einem hohen Dämpfungswert zu einem niedrigen Dämpfungswert aufweist Dieser Übergang ist hinsichtlich seiner Form (Sprungfunktion) beginnend vom unbeladenen Zustand, das heißt eines Trägergases ohne Feststoff- und/oder Flüssigkeitsbeladung, bis hin zu relativ großen Beladungen weitgehend unverändert. In Abhängigkeit der Beladung verschiebt sich aber der Frequenzbereich, innerhalb dessen der Übergang stattfindet, zu niedrigeren Frequenzen hin, wobei der Betrag der Frequenzverschiebung ein Maß für die Beladung des Trägergases mit festem und/oder flüssigem Gut ist

Das Wesen des erfindungsgemäßen Verfahrens besteht darin, ein elektrisches Wechselfeld innerhalb eines Rohr- oder Kanalabschnittes anzuregen und das Übersprechen dieses Wechselfeldes entlang einer festen Wegstrecke, die in Strömungsrichtung oder entgegen der Strömungsrichtung des beladenen Gasstromes liegt, zu erfassen, wobei zunächst im unbeladenen Zustand Form und Frequenzbereich besagten Überganges der Dämpfung ermittelt wird und im folgenden die Frequenzverschiebung dieses Überganges infolge der Beladung zu niedrigen Frequenzen hin bestimmt wird, um daraus die Beladung des Trägergases mit festem und/oder flüssigem Gut anhand bekannter Beziehungen zu errechnen. Zweckmäßigerweise wird dazu innerhalb des Überganges ein annähernd linearer Bereich bestimmt, der durch einen oberen Dämpfungsschwellwert mit zugehöriger unterer Frequenz und einen unteren Dämpfungsschweltwert mit zugehöriger oberer Frequenz eingegrenzt wird, wobei sich bei Verwendung eines realen Empfängers mit endlicher Empfindlichkeit innerhalb dieses annähernd linearen Bereiches ein Wendepunkt des Dämpfungsverlaufes über der Frequenz befindet, der sich mathematisch und technisch leicht ermitteln läßt. Innerhalb dieses annähernd linearen Bereiches sind geringe Frequenzänderungen mit großen Änderungen der Dämpfung verbunden. Punkte bzw. Bereiche innerhalb dieses annähernd linearen Bereiches lassen sich daher mit hoher Präzision erfassen bzw. bestimmen.

Technisch sind verschiedene Varianten denkbar, wie das Wesen der Erfindung umgesetzt werden kann.

So kann beispielsweise innerhalb des annähernd linearen Bereiches ein charakteristischer Dämpfungswert mit zugehöriger Frequenz im unbeladenen Zustand ausgewählt und zur Ermittlung der Beladung die Frequenz des eingekoppelten elektrischen Wechselfeldes ausgehend von einer Startfrequenz solange verändert (erhöht) werden, bis die gemessene Dämpfung im beladenen Zustand den gleiche Wert aufweist, wie die eingangs gewählte. Als Startfrequenz wählt man zweckmäßigerweise eine Frequenz, die kleiner oder gleich der unteren Frequenz des annähernd linearen Bereiches bei maximal im jeweiligen Anwendungsfall auftretender Beladung ist. Diese Startfrequenz kann dadurch bestimmt werden, daß von der unteren Frequenz des annähernd linearen Bereiches im unbeladenen Zustand die maximale, d. h. infolge maximaler Beladung auftretende Frequenzverschiebung $\Delta f$ abgezogen wird. Diese Frequenzverschiebung $\Delta f$ läßt sich leicht nach der Beziehung $\Delta f - f_0 (1 - 1/\sqrt{\mu_r \varepsilon_r})$, wobei $f_0$ die Grenzfrequenz des unbeladenen Rohr- oder Kanalsystems und $\mu_r$ die relative Permeabilität und $\varepsilon_r$ die relative Dielektrizitätskonstante des Gemisches aus gasförmigem Trägermedium und enthaltener Menge festen und/oder flüssigen Gutes ist, errechnen.

Der Frequenzunterschied zwischen den dem gewählten charakteristischen Dämpfungswert im unbeladenen und beladenen Zustand entsprechenden Frequenzen ist dann ein Maß für die Beladung.

Es ist leicht zu erkennen, daß zur Erreichung einer maximalen Empfindlichkeit des Verfahrens die gewählte Dämpfung innerhalb des steilsten, d. h. annähernd linearen Bereiches liegen sollte, wobei aus technischen Gründen der Wendepunkt des Dämpfungsverlaufes zu bevorzugen wäre.

Zur Beschleunigung des Meßvorganges ist es zweckmäßig, ausgehend von der genannten Startfrequenz die Frequenz solange in Stufen, die sich aus der Differenz der oberen und unteren Frequenz des annähernd linearen Bereiches errechnen, zu erhöhen, bis die gemessene Dämpfung innerhalb des annähernd linearen Bereiches liegt. Der Frequenzunterschied zwischen der der gemessenen Dämpfung im unbeladenen Zustand entsprechenden Frequenz und der gemessenen Frequenz ist, wie bereits erwähnt, das Maß für die Beladung.

Natürlich ist es auch möglich, die gemessene, innerhalb des annähernd linearen Bereiches liegende Dämpfung, sowie die zugehörende Frequenz anhand der Geradengleichung, die diesen annähernd linearen Bereich beschreibt, auf einen anderen gewählten charakteristischen Dämpfungswert umzurechnen und dann die Frequenzverschiebung dieses charakteristischen Dämpfungswertes vom unbeladenen zum beladenen Zustand zu bestimmen.

Ein wesentlicher Vorzug des erfindungsgemäßen Verfahrens wird ingesamt darin gesehen, daß an die Meßstrecke, entlang derer die Dämpfung des elektrischen Wechselfeldes ermittelt wird, keine extremen Anforderungen an die Rundheit des Rohres gestellt werden. Die Messung kann beispielsweise in üblichen der DIN entsprechenden Rohren vorgenommen werden. Die Empfindlichkeit des Meßverfahrens ist auch bei derartigen Rohren bemerkenswert gut und liegt bei weniger als 1 g Gut je $m^3$ Trägergas.

Ein weiterer Vorzug des Verfahrens besteht darin, daß die Anregung der elektrischen Wechselfelder über fehlangepaßte kurze hertzsche Strahler erfolgt. In gleicher Weise sind auch die Empfangsantennen ausgeführt. Damit wird erreicht, daß Abrasionen die Empfindlichkeit des Meßverfahrens kaum beeinflussen und ein Wechsel der Antennen infolge Verschleiß nur in größeren Abständen notwendig ist. Außerdem lassen sich kurze hertzsche Strahler ohne wesentlichen Aufwand in bestehende Rohr- oder Kanalsysteme einbauen.

Die Erfindung kann bevorzugt auch dann angewendet werden, wenn sich innerhalb eines Rohrsystems Strähnen ausbilden. Zur Erfassung und Berücksichtigung von Strähnen im Meßergebnis ist es erforderlich zwei um 90° gegeneinander azimutal verdrehte elektrische Wechselfelder anzuregen und die Frequenzverschiebung des annähernd linearen Bereiches der Dämpfungskurve dieser Wechselfelder entlang einer vorgegebenen Meßstrecke wie bereits beschrieben zu ermitteln.

Eine Variante des Verfahrens besteht dabei darin, beide um 90° gegeneinander azimutal verdrehte Wechselfelder zeitlich abwechselnd anzuregen und mittels in gleicher Weise azimutal um 90° gegeneinander verdrehter, axial zu den Sendeantennen fluchtender, um einen vorgegebenen Weg versetzter Empfangsantennen in beschriebener Weise die Frequenzverschiebung des annähernd linearen Bereiches der Dämpfungskurven zu ermitteln. Auftretende Strähnen werden zu unterschiedlichen Frequenzverschiebungen der Dämpfungskurven der um 90° gegeneinander verdrehten Wechselfelder führen.

Durch Mittelwertbildung, die zweckmäßigerweise solange erfolgt, bis weitere Messungen zu keiner wesentlichen Veränderung des Ergebnisses mehr führen, ergibt sich dann eine Frequenzverschiebung, die einer mittleren, die Strähne enthaltenden Beladungsdichte entspricht.

Es ist mittels des erfindungsgemäßen Verfahrens aber auch möglich, räumliche Lage und Intensität einer Strähne innerhalb eines Rohres zu bestimmen. Dazu werden in gleicher Weise innerhalb des Rohres zwei um 90° gegeneinander azimutal verdrehte frequenzgleiche und gleichphasige elektrische Wechselfelder angeregt und die Frequenzverschiebung des annähernd linearen Bereiches der Dämpfungskurve dieser Wechselfelder entlang einer vorgegebenen Meßstrecke ermittelt. Anregung und Ermittlung der Frequenzverschiebung erfolgt hierbei gleichzeitig. Beide Wechselfelder überlagern sich zu einem resultierenden Wechselfeld. Analog ergibt sich eine resultierende Frequenzverschiebung des annähernd linearen Bereiches der Dämpfungskurve als Maß der Beladung in azimutaler Richtung des resultierenden Wechselfeldes. Durch Variation der Amplituden der azimutal gegeneinander um 90° verdrehten Wechselfelder kann das resultierende Wechselfeld azimutal gedreht werden, wobei die Amplitude des resultierenden Wechselfeldes bevorzugt konstant gehalten werden sollte. Es wird nunmehr durch azimutale Drehung des resultierenden Wechselfeldes die maximale und minimale Frequenzverschiebung des annähernd linearen Bereiches der Dämpfungskurve ermittelt. Maximale und minimale Frequenzverschiebung sind bei einer Strähne azimutal um 90° verdreht. Aus den zugehörigen azimutalen Richtungen kann dann die Lage einer Strähne berechnet werden, wobei das Ergebnis zweideutig ist, da das elektrische Wechselfeld achsensymmetrisch ist. Dies bedeutet, daß die azimutale Ausrichtung des elektrischen Wechselfeldes bei maximaler Frequenzverschiebung der azimutalen Lage der Strähne in folgender Weise entspricht $\alpha_{St}$ - $\alpha_F$ + n 180°, wobei $\alpha_{St}$ - azimutaler Winkel der Strähne, $\alpha_F$ - azimutaler Winkel des elektrischen Wechselfeldes und n ein Element der natürlichen Zahlen ist. Eine so detektierte Strähne kann sich also immer in zwei punktsymmetrisch zueinander liegenden Quadranten befinden.

Aus dem Verhältnis von minimaler zu maximaler Frequenzverschiebung kann direkt das Verhältnis von minimaler zu maximaler die Strähne durchsetzender Feldstärke ermittelt werden. Anhand der bekannten quantitativen Feldstärkenverteilung des elektrischen Wechselfeldes im Rohr läßt sich die radiale Lage einer Strähne bestimmen.

Um eine eindeutige azimutale Lokalisierung der Strähne zu ermöglichen, muß in einem weiteren Verfahrensschritt die Hälfte des Rohrquerschnittes ermittelt werden, in der sich die Strähne befindet. Dies erfolgt erfindungsgemäß durch die Auswertung der in einer um 90° azimutal zur Sendeantenne verdrehten Empfangsantenne induzierten Wechselspannung. Setzt man die Position der Sendeantenne azimutal mit 0° fest, so wird bei der Position 180° ein elektrisches Wechselfeld gleicher Feldstärke aber entgegengesetzter Polarität festzustellen sein. Bei der Position 90° ist bei homogener Beladung die elektrische Feldstärke und damit die in der Empfangsantenne induzierte Wechselspannung gleich Null. Bei Auftreten einer Strähne in der Rohrhälfte der Sendeantenne wird das elektrische Wechselfeld so verzerrt, daß an der um 90° versetzten Empfangsantenne eine elektrische Feldstärke entgegengesetzter Polarität auftritt. Diese induziert eine elektrische Wechselspannung, die gegenphasig zu der die Sendeantenne speisenden Wechselspannung ist. Befindet sich die Strähne in der der Sendeantenne abgewandten Rohrhälfte, stellt man eine gleichphasige Spannung an Sende- und Empfangsantenne fest. Vorteilhafterweise wird diese Messung durch Vertauschen von Sende- und Empfangsantenne wiederholt, um auch in unmittelbarer Nähe der Sende- oder Empfangsantenne liegende Strähnen hinreichend sicher zu detektieren.

Das erfindungsgemäße Verfahren ermöglicht darüber hinaus die Messung derTransportgeschwindigkeit des transportierten Gutes. Hierzu werden an zwei axial zum Ort der Anregung des elektrischen Wechselfeldes versetzten Orten, vorzugsweise in und entgegen der Strömungsrichtung des transportierten Gutes, die zeitlichen Schwankungen der Beladungsdichte, die infolge turbulenter Strömung immer auftritt, aufgezeichnet und der zeitliche Versatz der beiden zeitlichen Verläufe mittels eines Korrelationsfilters ausgewertet. Aus dem zeitlichen Versatz und dem axialen Abstand der Meßorte kann die Transportgeschwindigkeit des transportierten Gutes ermittelt werden. Aus mittlerer Gutdichte und Transportgeschwindigkeit kann der Gutdurchsatz errechnet werden.

Das erfindungsgemäße Verfahren soll nachfolgend anhand eines Ausführungsbeispieles näher erläutert werden. Die zugehörigen Zeichnungen zeigen in:

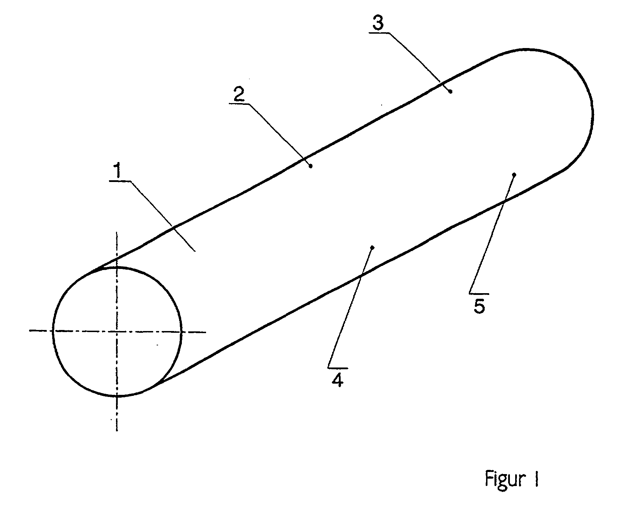

Figur 1:    ein Teilstück eines Rohrsystems der Brennerzuleitung eines Kohlekraftwerkes,

Figur 2:    Verlaufder Dämpfung als Funktion der Frequenz im Bereich des steilen Übergangs von einer hohen Dämpfung zu einer niedrigen Dämpfung,

Figur 3:    resultierendes elektrisches Wechselfeld bei Vorhandensein einer Strähne innerhalb der Brennerzuleitung (azimutale Richtung 0°),

Figur 4:    resultierendes elektrisches Wechselfeld bei Vorhandensein einer Strähne innerhalb der Brennerzuleitung (azimutale Richtung 90°).

Es besteht die Aufgabe, die in einer Brennerzuleitung 1 eines Kohlekraftwerkes mit kreisförmigem Querschnitt und einem Durchmesservon 500 mm im Luftstrom transportierte Menge an feinkörniger Kohle zu bestimmen sowie eventuelle Strähnen zu detektieren. Die Temperatur der Brennerzuleitung 1 wird als zeitlich constant angesetzt.

Es werden zunächst innerhalb eines geraden Abschnittes der Zuleitung 1 axial fluchtend im Abstand von 1000 mm zwei Bohrungen eingebracht, in die je ein kurzer hertzscher Strahler (Länge 5 cm) montiert werden. Dazu können beispielsweise normale Koaxdurchführungen verwendet werden. Es ist vorteilhaft, derart kurze, fehlangepaßte Antennen zu verwenden, weil diese zum einen einem geringeren mechanischen Verschleiß unterliegen und zum anderen durch anftretenden mechanischen Verschleiß nur in geringem Maße die Empfindlichkeit des elektrischen Systems beeinflußt wird.

Der in Ströhmungsrichtung des Luft-Kohlegemisches erste Strahler 2 dient als Sendeantenne, der zweite 3 als Empfangsantenne. Um ausbreitungsfähige Oberwellen im Rohr zu unterdrücken, werden den Antennen je ein steilflankiges Filter, dessen Grenzfrequenz knapp oberhalb der Grenzfrequenz der Zuleitung 1 liegt, vorgeschaltet.

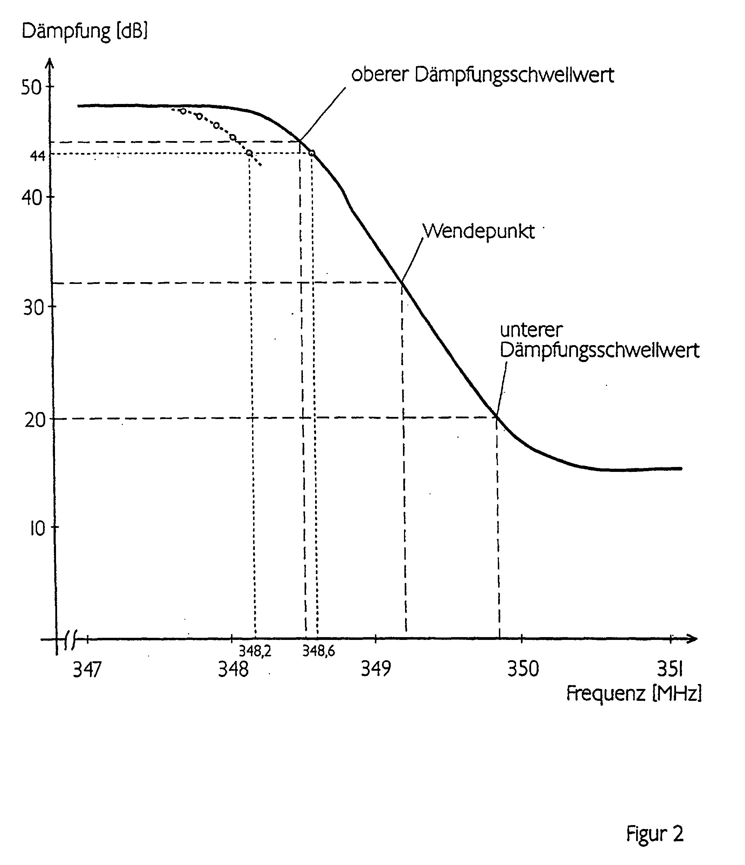

Zur Ermittlung der Parameter der Meßstrecke wird zunächst im unbeladenen Zustand die Dämpfung des elektrischen Wechsefeldes entlang der Meßstrecke als Funktion der Frequenz aufgezeichnet. Dazu wird ein elektrisches Wechselfeld über die Sendeantenne 2 innerhalb der Brennerzuleitung 1 angeregt und das Übersprechen dieses Wechselfeldes auf die Empfangsantenne 3 als Funktion der Frequenz normiert aufgezeichnet. Es ergibt sich ein in Figur 2 dargestellter typischer Kurvenverlauf, bei dem innerhalb eines Frequenzbereiches von ca. 1,3 MHz die Dämpfung relativ steil, annähernd linear abfällt Es wird nun innerhalb dieses Übergangsbereiches von einer hohen zu einer niedrigen Dämpfung ein annähernd linearer Referenzbereich bestimmt, der zwischen einem oberen Dämpfungsschwellwert von ca. 45 dB bei einer unteren Frequenz von ca. 348,5 MHz und einem unteren Dämpfungsschwellwert von ca. 20 dB bei einer oberen Frequenz von ca. 349,8 MHz liegt. Innerhalb dieses Referenzbereiches kann bei einer Frequenz von ca. 349,3 MHz und einer Dämpfung von ca. 32 dB ein Wendepunkt des Dämpfungsverlaufes ausgemacht werden.

Innerhalb dieses annähern linearen Bereiches ist der Abfall der Dämpfungskurve am steilsten, das heißt, geringe Beladungsänderungen bei konstanter Meßfrequenz verursachen eine große Dämpfungsänderung.

Die absoluten Werte des oberen und unteren Dämpfungsschwellwertes sind von der Leistung des angeregten elektrischen Wechselfeldes sowie der Empfängerempfindlichkeit abhängig. Aus Figur 2 läßt sich als Grenzfrequenz $f_0$, unterhalb derer keine Wellenausbreitung stattfindet, ein Wert von ca. 350 MHz bestimmen.

Beim vorliegenden Anwendungsfall ist maximal mit einer Beladung von 1500 g feinkörniger Kohle je $m^3$ Luft zu rechnen. Hieraus resultiert für das Luft-Kohlegemisch eine relative Dielektrizitätskonstante $\varepsilon_r$- 1,003. Die relative Permeabilität $\mu_r$ liegt bei 1. Anhand der Beziehung $\Delta f$-$f_0(1 - 1/\sqrt{\mu_r \varepsilon_r})$ wird ein Frequenzbetrag $\Delta f$ von 523kHz errechnet.

Zur Bestimmung der Menge an im Luftstrom enthaltener feinkörniger Kohle wird nun im beladenen Zustand ein elektrisches Wechselfeld mit einer Startfrequenz von ca. 347,9 MHz (die dem oberen Dämpfungsschwellwert im unbeladenen Zustand entsprechende untere Frequenz abzüglich dem Frequenzbetrag $\Delta f$) über die Sendeantenne 2 angeregt und mittels der Empfangsantenne 3 die über die Meßstrecke erfolgte Dämpfung bestimmt. Diese wird sich zunächst oberhalb des annähernd linearen Referenzbereiches befinden. Die Frequenz des elektrischen Wechselfeldes wird dann schrittweise solange erhöht, bis die zugehörige Dämpfung innerhalb des annähernd linearen Referenzbereiches liegt. Die diagrammatische Darstellung der bei verschiedenen Frequenzen im beladenen Zustand ermittelten Dämpfungswerte ist in Figur 2 als gestrichelte Kurve enthalten. Bei einer Frequenz von 348,2 MHz des elektrischen Wechselfeldes ergibt sich im beladenen Zustand eine Dämpfung von 44 dB. Diese Dämpfung liegt innerhalb des annähernd linearen Referenzbereiches. Im unbeladenen Zustand wird diese Dämpfung bei 348,6 MHz erreicht. Damit ist der annähernd lineare Bereich des Dämpfungsverlaufes im beladenen Zustand gegenüber dem unbeladenen Zustand um 0,4 MHz verschoben. Anhand der Beziehung $\Delta f$-$f_0(1 - 1/\sqrt{\mu_r \varepsilon_r})$ kann aus dieser Frequenzverschiebung $\Delta f$ des annähernd linearen Bereiches über die Veränderung der relative Dielektrizitätskonstante $\varepsilon_r$ des Luft-Kohlegemisches die Beladung des Luftstromes mit feinkörniger Kohle errechnet werden. Die relative Permeabilität $\mu_r$ liegt dabei bei 1. Es kann danach eine Beladung von 0,16 g Kohle je $m^3$ Luft errechnet werden.

Zur Erhöhung der Empfindlichkeit des Verfahrens ist es zweckmäßig, innerhalb des annähernd linearen Bereiches den Wendepunkt als Bezugspunkt auszuwählen und bei der Bestimmung der Menge an im Luftstrom enthaltener feinkörniger Kohle die Frequenz des elektrischen Wechselfeldes solange zu verändern, bis die zugehörige Dämpfung der Dämpfung des Wendepunktes entspricht Dies ist deshalb vorteilhaft, weil im Wendepunkt der annähernd lineare Bereich die größte Steilheit aufweist und damit die größte Empfindlichkeit erreicht wird.

Zur Beschleunigung des Ablaufes der Messung ist es zweckmäßig, ausgehend von der für maximale Beladung ermittelten Startfrequenz diese für den zweiten Meßpunkt um den Differenzbetrag zwischen oberer und unterer Frequenz des annähernd linearen Bereiches, im vorliegenden Beispiel um 1,3 MHz, zu erhöhen. Damit wird erreicht, daß sicher mit einer minimalen Anzahl von Messungen ein Meßpunkt mit einer Dämpfung innerhalb des annähernd linearen Bereiches gefunden wird. Anhand dieses Meßpunktes kann dann entweder direkt die Frequenzverschiebung des annähernd linearen Bereiches bestimmt werden oder es erfolgt zunächst über die Geradengleichung des annähernd linearen Bereiches eine Berechnung des Wendepunktes im beladenen Zustand und dann eine Berechnung der Frequenzverschiebung des annähernd linearen Bereiches im beladenen Zustand gegenüber dem unbeladenen Zustand anhand beider Wendepunkte.

Zur Erfassung von Strähnen im Meßergebnis ist es notwendig, eine weitere Sende- und Empfangsantenne 3 und 4 in den Abschnitt der Brennerzuleitung 1 einzubringen. Diese sind gegenüber der Sende- und Empfangsantenne 2 und 3 azimutal um 90° verdreht, axial aber in gleicher Höhe wie diese (axial fluchtend).

Zur Ermittlung einer durchschnittlichen, die Strähne berücksichtigenden Beladung wird mittels elektrischer Wechselfelder abwechselnd mittels der Sende- und Empfängsantennen 2 und 3 bzw. 4 und 5 wie eingangs beschrieben die Beladung des Luftstromes mit feinkörniger Kohle ermittelt und aus beiden Messungen der Mittelwert gebildet. Dieser berücksichtigt dann eine vorhandene Strähne. Durch mehrfache Wiederholung dieses Zyklusses mit Mittelwertbildung kann die Genauigkeit des Meßergebnisses verbessert werden. Zweckmäßig ist es, den Zyklus so lange zu wiederholen, bis sich der insgesamt gebildete Mittelwert nicht oder kaum noch verändert.

Zur Detektierungvon Strähnen werden über die Sendeantennen 2 und 4 zwei frequenzgleiche und gleichphasige elektrische Wechselfelder angeregt Diese überlagern sich innerhalb der Brennerzuleitung 1 zu einem resultierenden elektrischen Wechselfeld. Mittels der Empfangsantennen 3 und 5 wird das Übersprechen beider frequenzgleicher und phasengleicher Wechselfelder registriert und hieraus die Dämpfung des resultierenden elektrischen Wechselfeldes entlang der Meßstrecke ermittelt. Durch Veränderung der Amplituden der frequenzgleichen und gleichphasigen (phasenstarr verkoppelten) elektrischen Wechselfelder kann die Richtung des aus der Überlagerung beider um 90° gegeneinander verdrehter Wechselfelder resultierenden elektrischen Wechselfeldes azimutal um maximal 90° gedrehtwerden. Durch zusätzliche Phasenumkehr eines elektrischen Wechselfeldes kann der Drehbereich des resultierenden elektrischen Wechselfeldes auf 180° erweitert werden. Im vorliegenden Beispiel einer Brennerzuleitung 1 mit einem Durchmesser von 500 mm wird über die Antennen 2 und 4 mit einer Dämpfung von +20 dBm (entspricht einer Sendeleistung von ca. 100 mW) ein elektrisches Wechselfeld innerhalb der Brennerzuleitung angeregt Um ein azimutales Verdrehen des aus der Überlagerung der azimutal um 90° verdreht angeregten Einzelfelder resultierenden elektrischen Wechselfeldes in Schritten von 22,5° zu realisieren, werden die Antennenzuleitungen mit den in der Tabelle aufgeführten Werten bedämpft.

| azimutale Richtung | Antenne 2 | Antenne 4 |
|---|---|---|
| 0 ° | 0 dB | -50 dB |
| 22,5 ° | -1 dB | -9 dB |
| 45 ° | -3 dB | -3 dB |
| 67,5 ° | -9 dB | -1 dB |
| 90 ° | -50 dB | 0 dB |
| 112,5 ° | -9 dB (Phasenumkehr um 180 °) | -1 dB |
| 135 ° | -3 dB (Phasenumkehr um 180 °) | -3 dB |
| 157,5 ° | -1 dB (Phasenumkehr um 180 °) | -9 dB |

Es erfolgt bei den einzelnen angegebenen azimutalen Richtungen des resultierenden elektrischen Wechselfeldes die Ermittlung der Frequenzverschiebung des linearen Bereiches und darüber die Berechnung der Beladung des Luftstromes mit feinkörniger Kohle wie eingangs beschreiben. Die ermittelten Frequenzverschiebungen sind in nachfolgender Tabelle zusammengestellt:

| azimutale Richtung | Frequenzverschiebung |
|---|---|
| 0 ° | 125 kHz |
| 22,5 ° | 177 kHz |
| 45 ° | 200 kHz |
| 67,5 ° | 266 kHz |
| 90 ° | 376 kHz |
| 112,5 ° | 260 kHz |

(fortgesetzt)

| azimutale Richtung | Frequenzverschiebung |
|---|---|
| 135 ° | 192 kHz |
| 157,5 ° | 160 kHz |

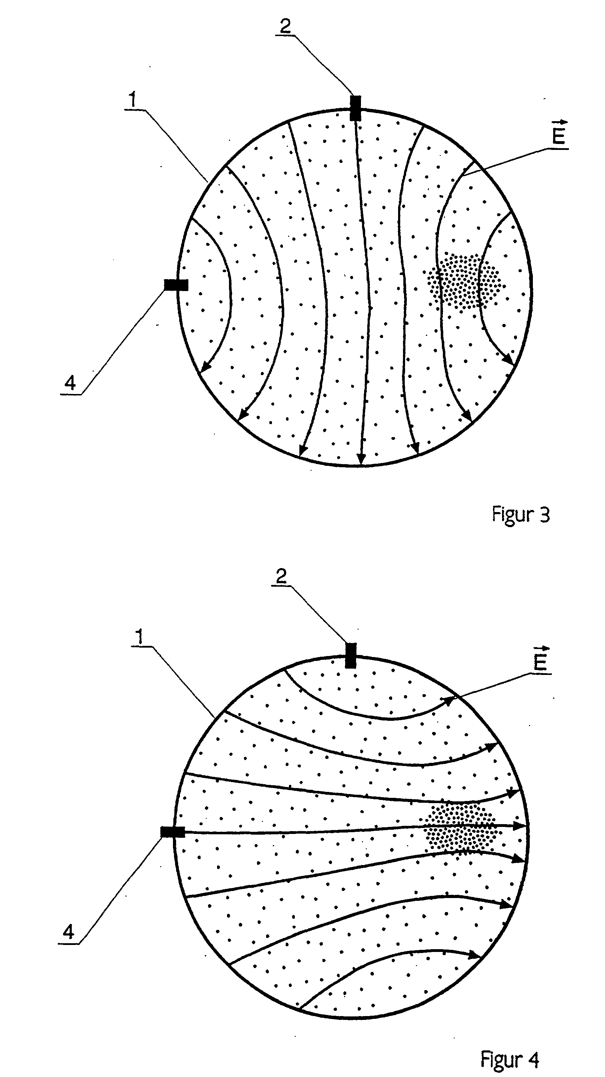

Es ist eindeutig ein Maximalwert der Frequenzverschiebung und damit der Beladung bei 90 ° festzustellen. Dies bedeutet, daß in azimutaler Richtung bei 90 ° eine Strähne vorhanden sein muß. Figur 3 und 4 veranschaulichen des resultierenden elektrischen Wechselfeldes innerhalb der Brennerzuleitung 1 bei azimutaler Richtung 0° (Figur 3) und azimutaler Richtung 90° (Figur 4).

Aus dem Verhältnis von maximaler Frequenzverschiebung (maximaler Beladung) zu minimaler Frequenzverschiebung (minimaler Beladung) kann auf die radiale Lage der Strähne geschlossen werden. Im vorliegenden Fall, das heißt bei einem Verhältnis von 1:3, befindet sich die Strähne in der Nähe der Rohrwand. Je weiter sich dieses Verhältnis gegen 1 verschiebt, um so näher ist die Strähne dem Mittelpunkt des Rohrquerschnittes. Eine direkt und zentrisch zum Mittelpunkt des Rohrquerschnittes liegende Strähne kann nicht detektiert werden.

Natürlich ist eine Strähnendetektierung immer nur dann sinnvoll, wenn die Strähne relativ ortsfest ist, das heißt, wenn sie im Verhältnis zur Meßzeit quasistationär ist. Bei realen Meßzeiten von wenigen Millisekunden ist dies in der Praxis in aller Regel gegeben. Ziel der Strähnendetektierung im vorliegenden Beispiel sind ohnehin Maßnahmen zur Beseitigung der Strähne. Insofern sind hier ausschließlich quasiortsfeste Strähnen von Bedeutung.

## Patentansprüche

1.  Verfahren zur Bestimmung der in einer Zweiphasenströmung mit gasförmigem Trägermedium enthaltenen Menge festen und/oder flüssigen Gutes,
    **dadurch gekennzeichnet, dass**

    A. innerhalb eines die Zweiphasenströmung führenden Abschnittes eines elektrisch leitfähigen Rohr- oder Kanalsystems ein nicht als elektromagnetische Welle ausbreitungsfähiges elektrisches Wechselfeld angeregt und in einem definierten Abstand vom Ort der Anregung in Strömungsrichtung oder entgegen der Strömungsrichtung der Zweiphasenströmung das Übersprechen des elektrischen Wechselfeldes mittels einer Empfangsantenne aufgezeichnet wird,
    B. zunächst zur Ermittlung der Parameter der Messstrecke ohne oder mit einer definierten Menge der zu bestimmenden Feststoff- und/oder Flüssigkeitsbeladung die Dämpfung des elektrischen Wechselfeldes entlang der Messstrecke als Funktion der Frequenz aufgezeichnet wird, im Bereich des steilsten Anstieges des ermittelten Dämpfungsverlaufes ein annähernd linearer Bereich zwischen einem oberen Dämpfungsschwellwert und der dazugehörigen unteren Frequenz und einem unteren Dämpfungsschwellwert und der dazugehörigen oberen Frequenz bestimmt und als Referenzbereich gespeichert wird,
    C. zur Bestimmung der Menge festen und/oder flüssigen Gutes in der Zweiphasenströmung mittels eines geeigneten Messablaufes die Frequenzverschiebung des annähernd linearen Bereiches festgestellt wird und aus dieser die enthaltene Menge an festem und/oder flüssigem Gut bestimmt wird.

2.  Verfahren nach Anspruch 1,
    **dadurch gekennzeichnet, daß**
    zur Bestimmung der Menge festen und/oder flüssigen Gutes in der Zweiphasenströmung dem Schritt C. des 1. Anspruches gemäß ein elektrisches Wechselfeld mit einer Frequenz, die um den Betrag $\Delta f$, der der Frequenzverschiebung des annähernd linearen Bereiches bei maximaler im gegebenen Anwendungsfall auftretender Flüssigkeits- oder Feststoffbeladung entspricht und nach der Beziehung $\Delta f \cdot f_0 (1 - 1/\sqrt{\mu_r \varepsilon_r})$, wobei $f_0$ die Grenzfrequenz des unbeladenen Rohr- oder Kanalsystems und $\mu_r$ die relative Permeabilität und $\varepsilon_r$ die relative Dielektrizitätskonstante des Gemisches aus gasförmigem Trägermedium und enthaltener Menge festen und/oder flüssigen Gutes ist, kleiner als die im Schritt B. ermittelte untere Frequenz ist, angeregt wird, mittels der Empfangsantenne die Dämpfung des Wechselfeldes gemessen wird, diese mit einer als Referenz gewählten Dämpfung, die zwischen dem unteren und oberen im Schritt B. ermittelten Dämpfungsschwellwerten liegt, verglichen wird und bei Überschreitung die Frequenz des elektrischen Wechselfeldes solange erhöht wird, bis der Wert der gemessenen Dämpfung dem Wert der als Referenz gewählten Dämpfung entspricht und aus der Frequenzabweichung zwischen der der gewählten Dämpfung innerhalb des Referenzbereiches im unbeladenen Zustand zugehörenden Frequenz und der diesem Dämpfungswert im beladenen Zustand zugehörenden Frequenz die enthaltene Menge an festem und/oder flüssigem Gut bestimmt wird.

3. Verfahren nach einem dervorgenannten Ansprüche,
**dadurch gekennzeichnet, daß**
zur Ermittlung der Parameter der Meßstrecke dem Schritt B. des 1. Anspruches gemäß der annähend lineare Bereich in der Umgebung des Wendepunktes bestimmt wird.

4. Verfahren nach einem der vorgenannten Ansprüche,
**dadurch gekennzeichnet, daß**
zur Ermittlung der Frequenzabweichung dem 2. Anspruch gemäß der Wendepunkt als Referenz gewählt wird.

5. Verfahren nach Anspruch 1 oder 2,
**dadurch gekennzeichnet,**
**daß** zur Bestimmung der Menge festen und/oder flüssigen Gutes in der Zweiphasenströmung ein elektrisches Wechselfeld mit

D. zunächst einer Frequenz, die um den Betrag $\Delta f$, der der Frequenzverschiebung des annähernd linearen Bereiches bei maximaler Flüssigkeits- oder Feststoffbeladung entspricht, kleiner als die im Schritt B. des 1. Anspruches ermittelte untere Frequenz des Referenzbereiches ist, angeregt wird, mittels der Empfangsantenne die Dämpfung des Wechselfeldes gemessen wird, diese mit dem Referenzbereich verglichen wird,
E. bei Überschreitung des oberen Dämpfungsschwellwertes die Frequenz des elektrischen Wechselfeldes maximal um den Differenzbetrag zwischen oberer und unterer Frequenz des Referenzbereiches erhöht wird und erneut mittels der Empfangsantenne die Dämpfung des Wechselfeldes gemessen wird, dieser Schritt solange wiederholt wird, bis die gemessene Dämpfung zwischen unterem und oberem Dämpfungsschwellwert liegt und
F. aus der Frequenzabweichung zwischen der der gemessenen Dämpfung zugehörenden Frequenz und der diesem Wert der Dämpfung innerhalb des Referenzbereiches im unbeladenen Zustand zugehörenden Frequenz die enthaltene Menge an festem und/oder flüssigem Gut bestimmt wird.

6. Verfahren nach einem der vorgenannten Ansprüche,
**dadurch gekennzeichnet,**
**daß** innerhalb eines die Zweiphasenströmung führenden Abschnittes eines elektrisch leitfähigen Rohrsystems zwei elektrische Wechselfelder azimutal um 90° gegeneinander verdreht zeitlich abwechselnd angeregt werden, in einem definierten Abstand von den azimutal um 90° gegeneinander verdrehten Orten der Anregung in Strömungsrichtung oder entgegen der Strömungsrichtung der Zweiphasenströmung das Übersprechen der elektrischen Wechselfelder mittels zweier ebenfalls azimutal um 90° gegeneinander verdrehter zu den Orten der Anregung der elektrischen Wechselfelder axial fluchtender Empfangsantenne, die jeweils einem Anregungsort zugeordnet sind, aufgezeichnet wird, daß jeweils den Schritten B. und C. des 1. Anspruches gemäß oder dem 2. bis 5. Anspruch gemäß die enthaltene Menge an festem und/oder flüssigem Gut bestimmt wird und aus der Folge der einzelnen Messungen der Mittelwert gebildet wird.

7. Verfahren nach Anspruch 6,
**dadurch gekennzeichnet,**
**daß** die Messungen solange fortgesetzt werden, bis der gebildete Mittelwert eine vorgegebene Toleranzgrenze nicht mehr über- bzw. unterschreitet.

8. Verfahren nach einem der Ansprüche 1 bis 5,
**dadurch gekennzeichnet,**
**daß** innerhalb eines die Zweiphasenströmung führenden Abschnittes eines elektrisch leitfähigen annähernd runden Rohrsystems gleichzeitig zwei gleichphäsige, frequenzgleiche elektrische Wechselfelder azimutal um 90° gegeneinander verdreht angeregt werden, in einem definierten Abstand von den azimutal um 90° verdrehten Orten der Anregung in Strömungsrichtung oder entgegen der Strömungsrichtung der Zweiphasenströmung das Übersprechen beider elektrischer Wechselfelder mittels zweier ebenfalls azimutal um 90° gegeneinander verdrehter zu den Orten der Anregung der elektrischen Wechselfelder fluchtender Empfangsantennen, die jeweils einem Anregungsort zugeordnet sind, aufgezeichnet wird, und durch Überlagerung beider um 90° gegeneinander verdrehter Wechselfelder ein resultierendes Wechselfeld gebildet wird, das durch Variation der Amplituden der angeregten azimutal um 90° gegeneinander verdrehter Wechselfelder sowie durch Phasenumkehr eines angeregten elektrischen Wechselfeldes in azimutaler Richtung so um maximal 180° gedreht werden kann, daß anhand des resultierenden Wechselfeldes jeweils den Schritten B. und C. des 1. Anspruches gemäß oder dem 2. bis 5. Anspruch gemäß die enthaltene Menge an festem und/oder flüssigem Gut bestimmt wird, wobei das resultierende Wechselfeld in azimutaler Richtung solange gedreht wird, bis jeweils eine maximale und minimale enthaltene Menge an festem und/oder flüssigem Gut bestimmt wurde und aus diesen sowie deren räumlicher Zuordnung die insgesamt enthaltene Menge an festem und/oder flüssigem Gut errechnet wird sowie Lage und Dichte einer vorhandenen Strähne annähernd bestimmt wird, wobei die Strähne in ihrer azimutalen Lage lediglich in einem Winkelbereich von 180° eindeutig bestimmbar ist.

**9.** Verfahren nach Anspruch 8,

**dadurch gekennzeichnet,**

**daß** zur eindeutigen Bestimmung der Lage einer Strähne im Winkelbereich von 360° zunächst dem 8. Anspruch gemäß die Lage einer Strähne im Winkelbereich von 180° bestimmt wird und in einem nachfolgenden Verfahrensschritt ein elektrisches Wechselfeld einer Frequenz innerhalb des annähernd linearen Bereiches der Dämpfungskurve angeregt wird und mittels einer azimutal zur Sendeantenne um 90° verdrehter Empfangsantenne erfaßt wird und anhand der Phasenlage der an der Empfangsantenne induzierten Wechselspannungen die eindeutige Zuordnung der Lage der Strähne erfolgt, wobei ausgehend von einem azimutalen Winkel von 0° in Position der Sendeantenne bei Gleichphasigkeit die Strähne im Bereich von > 90° bis < 270° liegt und bei Gegenphasigkeit im Bereich von > 270° bis < 90° liegt

**10.** Verfahren nach einem der vorgenannten Ansprüche,

**dadurch gekennzeichnet,**

**daß** das Anregen der elektrischen Wechselfelder sowie das Empfangen des Übersprechens der elektrischen Wechselfelder mittels kurzer, fehlangepaßter hertzscher Strahler erfolgt.

## Claims

**1.** Method for the determation of the quantity of solid and/or liquid material which is contained in a two-phase current with a gaseous carrier medium

**characterised in that**

A. in a section, which contains the two-phase current, of an electrically conducting pipe or channel system an alternating electric field which cannot propagate as an electromagnetic wave is induced and in a defined distance from the point of induction in direction of flow or against the direction of flow of the two-phase current the cross-talk of the alternating electric field is recorded using a receiving aerial,

B. first, for the determination of the parameters of the measurement section without or with a defined quantity of the solid and/or liquid material loading, the attenuation of the alternating electric field along the measurement section as function of the frequency is recorded, in the area of the steepest ascent of the determined course of the attenuation an nearly linear portion between an upper attenuation threshold value and the associated lower frequency and a lower attenuation threshold value and the associated upper frequency is determined and stored as reference portion,

C. for the determination of the quantity of solid and/or liquid material in the two-phase current by means of a suitable measurement process the frequency shift of the nearly linear portion is determined by means of a suitable measurement process and therefrom the contained quantity of solid and/or liquid material is calculated.

**2.** Method to Claim 1

**characterised in that**

for the determination of the quantity of solid and/or liquid material in the two-phase current according to step C of Claim 1 an alternating electric field with a frequency is induced which is smaller than the lower frequency determined in step B by the amount of $\Delta f$, which corresponds to the frequency shift of the approximately linear portion for maximum solid and/or liquid material loading occuring in the given case of application and is calculated using the equation $\Delta f = f_0(1 - 1/\sqrt{\mu_r \varepsilon_r})$, where $f_0$ is the limiting frequency of the unloaded piping or channel system and $\mu_r$ is the relative permeability, and $\varepsilon_r$ is the relative dielectric constant of the mixture of gaseous carrier medium and the amount of solid and/or liquid material contained, the attenuation of the alternating electric field is measured using the receiving aerial, this attenuation is compared with an attenuation chosen as reference attenuation lying between the lower and the upper attenuation threshold values determined in step B, and in case of exceeding the frequency of the alternating electric field is increased until the value of the measured attenuation corresponds with the value of the attenuation chosen as the reference attenuation, and from the frequency deviation between the frequency associated to the chosen attenuation within the reference portion in unloaded condition and the frequency associated to this attenuation value in loaded condition the contained quantity of solid and/or liquid material is determined.

3. Method to any of the above-mentioned Claims
   **characterised in that**
   for the determination of the parameters of the measurement section according to step B of Claim 1 the nearly linear portion is determined in the environment of the inflection point.

4. Method to any of the above-mentioned Claims
   **characterised in that**
   for the determination of the frequency deviation according to Claim 2 the inflection point is chosen as reference point.

5. Method to Claims 1 or 2
   **characterised in that**
   for the determination of the quantity of solid and/or liquid material in the two-phase current

   D. an alternating electric field with, first, a frequency is induced which is smaller than the lower frequency of the reference portion determined according to step B of Claim 1 by $\Delta f$ which corresponds to the frequency shift of the nearly linear portion at maximum liquid or solid material loading, the attenuation of the alternating electric field is measured by the receiving aerial, this attenuation is compared with the reference portion,
   E. if the upper attenuation threshold value is exceeded, the frequency of the alternating electric field is increased by the difference between upper and lower frequency of the reference portion maximum and the attenuation of the alternating electric field is measured again using the receiving aerial, this step is repeated until the measured attenuation is between the lower and upper attenuation threshold value, and
   F. from the frequency deviation between the frequency associated to the measured attenuation and the frequency associated to this value of the attenuation within the reference portion in unloaded condition the contained quantity of solid and/or liquid material is determined.

6. Method to any of the above-mentioned Claims
   **characterised in that**
   within a section, which contains the two-phase current, of an electrically conducting pipe system, two alternating electric fields which are rotated azimuthally by 90° to each other are alternately by time induced, in a defined distance of the points of induction, which are azimuthally rotated by 90° to each other, in the direction of flow or against the direction of flow of the two-phase current the cross-talk of the alternating electric fields is recorded by means of two receiving aerials each associated to a point of induction, which are also azimuthally rotated by 90° to each other and axially aligned with the points of induction of the alternating electric fields, the quantity of the solid and/or liquid material contained is determined according to steps B and C of Claim 1 or according to Claims 2 to 5, and from the series of measurements the mean is calculated.

7. Method to Claim 6
   **characterised in that**
   the measurements are continued until the calculated mean value no longer exceeds given upper and lower tolerance limits.

8. Method to any of the Claims 1 to 5
   **characterised in that**
   within a section, which contains the two-phase current, of an electrically conducting pipe system of nearly circular cross-section two alternating electric fields of equal frequencies and phases are induced rotated azimuthally by 90° to each other, in a defined distance from the points of induction which are rotated azimuthally by 90° to each other in direction of flow or against direction of flow of the two-phase current the cross-talk of both alternating electric fields is recorded by means of two receiving aerials which are also and aligned with the points of induction of the alternating electric fields, and by superposition of both alternating electric fields which are rotated by 90° to each other a resultant alternating electric field is created which can be rotated by variation of the amplitudes of the induced alternating electric fields which are rotated azimuthally by 90° to each other and by phase reversal of an induced alternating electric field by 180° maximum such that by means of the resultant alternating electric field according to steps B and C of Claim 1 or according to Claims 2 to 5 in each case the quantity of the solid and/or liquid material contained is determined, whereby the resultant alternating electric field is rotated until a maximum and a minimum quantity of the solid and/or liquid material contained has been determined, and from these and the spatial relation of them as well the total quantity of the solid and/or liquid material contained is calculated as well as the position and denisty of a present rope is approximately determined, whereby the rope in its azimuthal location can only clearly determined in an angular range of 180°.

9.  Method to Claim 8
    **characterised in that**
    for the unambiguous determination of the location of a rope in the angular range of 360° first, according to Claim 8 the location of a rope is determined in the angular range of 180° and in a subsequent process step an alternating electric field of a frequency within the nearly linear portion of the attenuation curve is induced and recorded by means of a receiving aerial which is rotated azimuthally by 90° to the transmitting aerial and based on the phase position of the alternating voltages induced at the receiving aerial the unambiguous assignment of the location of the rope takes place, whereby beginning at an azimuthal angle of 0° in the position of the transmitting aerial for equal phases the rope is in the range of >90° to <270° and for phase opposition is in the range of >270° to <90°.

10. Method to any of the above-mentioned Claims
    **characterised in that**
    the induction of the alternating electric fields and the reception of the cross-talk of the alternating electric fields take place by means of short, mismatched, hertzian radiators.

## Revendications

1.  Procédé de détermination de la quantité de matériau solide et/ou liquide contenu dans un écoulement à deux phases avec milieu porteur gazeux, **caractérisé en ce que**

    A. on excite à l'intérieur d'une section d'un système de canaux ou de tubes conducteurs électriquement, conduisant l'écoulement à deux phases, un champ alternatif électrique non susceptible de se propager comme onde électromagnétique et on enregistre la diaphonie du champ électrique alternatif au moyen d'une antenne de réception à une distance définie de l'endroit de l'excitation dans le sens de l'écoulement ou en sens inverse de l'écoulement à deux phases,
    B. pour déterminer les paramètres de la distance de mesure sans ou avec une quantité définie du chargement solide et/ou liquide à déterminer, on enregistre d'abord l'atténuation du champ électrique alternatif le long de la distance de mesure sous la forme d'une fonction de la fréquence, on détermine dans la zone de la hausse la plus abrupte de la courbe d'atténuation déterminée une zone approximativement linéaire entre une valeur seuil d'atténuation supérieure et la fréquence inférieure associée et une valeur seuil d'atténuation inférieure et la fréquence supérieure associée et on l'enregistre comme zone de référence,
    C. pour déterminer la quantité de matériau solide et/ou liquide dans l'écoulement à deux phases, on observe le décalage de fréquence de la zone approximativement linéaire au moyen d'un tracé de mesure approprié et on en déduit la quantité contenue en matériau solide et/ou liquide.

2.  Procédé selon la revendication 1, **caractérisé en ce que**, pour déterminer la quantité de matériau solide et/ou liquide dans l'écoulement à deux phases selon l'étape C de la revendication 1, on excite un champ électrique alternatif doté d'une fréquence qui est inférieure à la fréquence inférieure, déterminée à l'étape B, de la valeur $\Delta f$ correspondant au décalage de fréquence de la zone approximativement linéaire pour un chargement en liquide ou en matière solide maximale se produisant dans le cas d'utilisation donné et selon la relation $\Delta f - f_0(1-1/\sqrt{\mu_r \varepsilon_r})$, dans laquelle $f_0$ représente la fréquence limite du système de canaux ou de tubes non chargés et $\mu_r$ la perméabilité relative et $\varepsilon_r$ la constante diélectrique relative du mélange constitué de milieu porteur gazeux et de la quantité contenue de matériau solide et/ou liquide, on mesure l'atténuation du champ électrique alternatif au moyen de l'antenne de réception, on la compare avec une atténuation choisie comme référence qui se situe entre les valeurs seuil d'atténuation inférieure et supérieure, déterminées à l'étape B, et en cas de dépassement, on augmente la fréquence du champ électrique alternatif jusqu'à ce que la valeur de l'atténuation mesurée corresponde à la valeur de l'atténuation choisie comme référence et on détermine la quantité contenue de matériau solide et/ou liquide à partir du différentiel de fréquence entre la fréquence associée à l'atténuation choisie à l'état non chargé à l'intérieur de la zone de référence et la fréquence associée à l'état chargé associée à cette valeur d'atténuation.

3.  Procédé selon l'une des revendications précédentes, **caractérisé en ce que**, pour déterminer les paramètres de la distance de mesure, selon l'étape B de la revendication 1, on détermine la zone approximativement linéaire dans la région du point d'inflexion.

4.  Procédé selon l'une des revendications précédentes, **caractérisé en ce que** pour déterminer le différentiel de fréquence selon la revendication 2, on choisit le point d'inflexion comme référence.

5.  Procédé selon la revendication 1 ou 2, **caractérisé en ce que** pour déterminer la quantité de matériau solide et/ ou liquide dans l'écoulement à deux phases :

    D. on excite d'abord un champ électrique alternatif doté d'une fréquence qui est inférieure à la fréquence inférieure de la zone de référence, déterminée à l'étape B de la revendication 1, de la valeur $\Delta f$ correspondant au décalage de fréquence de la zone approximativement linéaire pour un chargement en liquide ou en matière solide maximal, on mesure l'atténuation du champ électrique alternatif au moyen de l'antenne de réception, on la compare avec la zone de référence,
    E. en cas de dépassement de la valeur seuil d'atténuation supérieure, on augmente la fréquence du champ électrique alternatif au maximum de la valeur de la différence entre fréquence supérieure et fréquence inférieure de la zone de référence et on mesure à nouveau l'atténuation du champ électrique alternatif au moyen de l'antenne de réception, cette étape étant reproduite jusqu'à ce que l'atténuation mesurée se situe entre la valeur seuil d'atténuation inférieure et supérieure, et
    F. on détermine la quantité contenue en matériau solide et/ou liquide à partir du différentiel de fréquence entre la fréquence associée à l'atténuation mesurée et la fréquence associée à cette valeur d'atténuation à l'intérieur de la zone de référence à l'état non chargé.

6.  Procédé selon l'une des revendications précédentes, **caractérisé en ce que** l'on excite tour à tour dans le temps, à l'intérieur d'une section d'un système de tubes conducteurs électriquement, conduisant l'écoulement à deux phases, deux champs électriques alternatifs, tournés l'un par rapport à l'autre à 90°, que l'on enregistre la diaphonie des champs électriques alternatifs à une distance définie des endroits de l'excitation, tournés l'un par rapport à l'autre sur l'azimut à 90°, dans le sens de l'écoulement ou dans le sens inverse de l'écoulement à deux phases, au moyen de deux antennes de réception, chacune attribuée à un endroit d'excitation, également tournées à 90° l'une par rapport à l'autre sur l'azimut et alignées axialement par rapport aux endroits de l'excitation des champs électriques alternatifs, que l'on détermine, selon respectivement les étapes B et C de la revendication 1 ou selon la revendication 2 à 5, la quantité contenue de matériau solide et/ou liquide et que l'on déduit de la série de mesures la moyenne.

7.  Procédé selon la revendication 6, **caractérisé en ce que** les mesures doivent être poursuivies jusqu'à ce que la valeur moyenne formée n'excède pas ou ne soit pas inférieure à une limite de tolérance prédéterminée.

8.  Procédé selon l'une des revendications 1 à 5, **caractérisé en ce que** l'on excite simultanément, à l'intérieur d'une section d'un système de tubes approximativement circulaires, conducteurs électriquement, conduisant l'écoulement à deux phases, deux champs électriques alternatifs de même phase et de même fréquence, tournés sur l'azimut à 90° l'un par rapport à l'autre, que l'on enregistre la diaphonie des deux champs électriques alternatifs à une distance définie des endroits de l'excitation, tournés l'un par rapport à l'autre sur l'azimut à 90°, dans le sens de l'écoulement ou dans le sens inverse de l'écoulement à deux phases, au moyen de deux antennes de réception, chacune attribuée à un endroit d'excitation, également tournées à 90° l'une par rapport à l'autre sur l'azimut et alignées par rapport aux endroits de l'excitation des champs électriques alternatifs, et que la superposition des deux champs alternatifs tournés à 90° l'un par rapport à l'autre forme un champ alternatif résultant qui peut être tourné d'au maximum 180°, grâce à la variation des amplitudes des champs alternatifs excités, tournés à 90° l'un par rapport à l'autre sur l'azimut, et grâce à l'inversion de phases d'un champ électrique alternatif en direction de l'azimut, que l'on détermine, à l'aide du champ alternatif résultant, selon respectivement les étapes B et C de la revendication 1 ou selon la revendication 2 à 5, la quantité contenue de matériau solide et/ou liquide, le champ alternatif résultant en direction azimutal étant tourné jusqu'à ce que l'on ait déterminé respectivement une quantité contenue maximale et minimale de matériau solide et/ou liquide, que l'on calcule, à partir de celle-ci et de son affectation spatiale, la quantité de matériau solide et/ou liquide contenue globalement et que l'on détermine approximativement la position et la densité d'un écheveau présent, l'écheveau pouvant être déterminé sans équivoque dans sa position azimutale uniquement dans une zone d'angle de 180°.

9.  Procédé selon la revendication 8, **caractérisé en ce que** l'on détermine, afin de trouver sans équivoque la position d'un écheveau dans la zone de l'angle de 360° d'abord, selon la revendication 8, la position d'un écheveau dans la zone de l'angle de 180° et que l'on excite dans une étape de procédé suivante, un champ électrique alternatif doté d'une fréquence située à l'intérieur de la zone approximativement linéaire de la courbe d'atténuation, que l'on enregistre au moyen d'une antenne de réception tournée de 90° par rapport à l'antenne d'émission sur l'azimut et que l'on procède à l'affectation sans équivoque de la position de l'écheveau à l'aide de la position de la phase des tensions alternatives induites sur l'antenne de réception, l'écheveau se situant dans la zone, en partant de l'angle de l'azimut de 0° dans la position de l'antenne d'émission, allant de > 90° à < 270° en cas de phases identiques, et dans la zone allant de > 270° à < 90° en cas de phases opposées.

10. Procédé selon l'une des revendications précédentes, **caractérisé en ce que** l'excitation des champs électriques alternatifs et la réception de la diaphonie des champs électriques alternatifs s'effectuent au moyen d'émetteurs d'ondes courtes hertziennes désadaptés.

Figur 1

Figur 2

Figur 3

Figur 4